# EUROPÄISCHE PATENTSCHRIFT

(11) **EP 2 200 874 B1**
(45) Veröffentlichungstag und Bekanntmachung des Hinweises auf die Patenterteilung: **12.01.2011**
(21) Anmeldenummer: 08786321.3
(22) Anmeldetag: 22.07.2008
(51) Int. Cl.: B60R 21/017

(54) **SCHALTUNG UND VERFAHREN ZUM PRÜFEN VON ELEKTRISCH STEUERBAREN LEISTUNGSSCHALTERN FÜR EIN ANSTEUERN VON PERSONENSCHUTZMITTELN**
CIRCUIT AND METHOD FOR TESTING ELECTRICALLY CONTROLLABLE POWER SWITCHES FOR ACTIVATING PASSENGER PROTECTION MEANS
CIRCUIT ET PROCÉDÉ DE CONTRÔLE DE COMMUTATEURS DE PUISSANCE À COMMANDE ÉLECTRIQUE POUR UNE COMMANDE DE MOYENS DE PROTECTION DE PERSONNES

(30) Priorität: 17.09.2007 DE 102007044345
(43) Veröffentlichungstag der Anmeldung: 30.06.2010
(73) Patentinhaber: Robert Bosch GmbH, 70442 Stuttgart (DE)
(72) Erfinder: WOLF, Rene, 71701 Schwieberdingen (DE); HENIG, Thomas, 71254 Ditzingen (DE); SCHUMACHER, Hartmut, 71691 Freiberg (DE); MAIER, Hermann, 71706 Markgroeningen (DE); WIRTH, Jens, 74232 Abstatt (DE)
(86) Internationale Anmeldenummer: PCT/EP2008/059585
(87) Internationale Veröffentlichungsnummer: WO 2009/037033

(56) Entgegenhaltungen:
- DE-A1- 4 218 645
- DE-A1- 19 815 391
- DE-C1- 19 744 760
- US-A- 5 659 474
- US-A- 5 872 460
- US-B1- 7 250 890

## Beschreibung

### Stand der Technik

Die Erfindung betrifft eine Schaltung bzw. ein Verfahren zum Prüfen von elektrisch steuerbaren Leistungsschaltern für ein Ansteuern von Personenschutzmitteln nach der Gattung der unabhängigen Patentansprüche. Eine derartige Schaltung ist aus der DE 19744760 C gemäß Oberbegrift der Anspruch 1 bekannt.

Aus DE 36 27 239 A1 ist es bereits bekannt, dass eine Schaltung zur Ansteuerung und Überwachung von Zündkreisen in Sicherheitssystemen realisierbar ist. Insbesondere werden Maßnahmen für eine präzise Fehlererkennung vorgeschlagen.

### Offenbarung der Erfindung

Die erfindungsgemäße Schaltung bzw. das erfindungsgemäße Verfahren zum Prüfen von elektrisch steuerbaren Leistungsschaltern für ein Ansteuern von Personenschutzmitteln mit den Merkmalen der unabhängigen Patentansprüche haben demgegenüber den Vorteil, dass diese elektrisch steuerbaren Leistungsschalter durch eine Nachbildung des Zündelements in einfacher Art und Weise geprüft werden können. Diese Nachbildung hat dabei den Vorteil, dass der Widerstand, den diese Nachbildung bildet, in aufeinanderfolgenden zeitlichen Blöcken jeweils durch eine Ansteuerung der Nachbildung verändert werden kann. Damit kann das dynamische Verhalten eines Zündelements während der Bestromung zur Ansteuerung der Personenschutzmittel nachgebildet werden. Das Zündelement, üblicherweise eine Sprengladung, verändert seinen elektrischen Widerstand in Abhängigkeit von der Zeit und dabei auch zum Teil in unvorhersehbarer Weise. Das erfindungsgemäße Verfahren bzw. die erfindungsgemäße Schaltung sind besonders geeignet, dieses Verhalten nachzubilden. Dabei ist die erfindungsgemäße Schaltung bzw. das Verfahren besonders einfach realisierbar.

Unter einer Schaltung wird vorliegend eine elektrische Schaltung von elektrischen Bauelementen verstanden. Prüfen bedeutet vorliegend, dass die Funktionsweise der elektrisch steuerbaren Leistungsschalter geprüft wird, um ihre Funktionsweise nachzuweisen. Als elektrisch steuerbare Leistungsschalter kommen verschiedene Transistortypen in Frage, die die notwendigen Ströme zur Bestromung der Personenschutzmittel verkraften können. Beispiele für solche Transistoren sind Bipolar- und Feldeffekttransistoren. Üblicherweise werden pro Zündkreis zwei oder drei Leistungsschalter verwendet, es ist jedoch möglich, mehr als drei zu verwenden.

Ansteuern bedeutet vorliegend, die Aktivierung der Personenschutzmittel wie Airbags, Gurtstraffer, crashaktive Kopfstützen oder aktive Schutzmittel wie eine Fahrdynamikregelung oder Bremsen.

Wie oben bereits definiert, ist unter einem Zündelement üblicherweise eine Sprengladung zu verstehen, die beispielsweise durch Abscheidetechniken wie sputtern, aufdampfen usw. hergestellt werden kann.

Mit dem Widerstand ist vorliegend der elektrische Widerstand der Nachbildung und damit dieser Nachbildungsschaltung gemeint. Die Nachbildungsschaltung weist aktive Bauelemente auf, die sich ansteuern lassen, um den Widerstand zu verändern.

Unter aufeinanderfolgenden zeitlichen Blöcken sind aufeinander folgende Zeitintervalle zu verstehen. Dabei ist es möglich, dass zwischen diesen Blöcken auch Pausen vorgesehen sein können oder die Blöcke ineinander übergehen.

Eine Veränderung des Widerstands bedeutet, dass sich der Wert des elektrischen Widerstands erhöht oder erniedrigt.

Durch die in den abhängigen Ansprüchen aufgeführten Maßnahmen und Weiterbildungen sind vorteilhafte Verbesserungen der in den unabhängigen Patentansprüchen angegebenen Schaltung bzw. des in den unabhängigen Patentansprüchen angegebenen Verfahrens zum Prüfen von elektrisch steuerbaren Leistungsschaltern für ein Ansteuern von Personenschutzmitteln möglich.

Es ist dabei vorteilhaft, dass die Ansteuerung digital ausgebildet ist. Damit können beispielsweise Transistorschalter in der Nachbildung ein- und ausgeschaltet werden, um die entsprechenden Veränderungen im Widerstand sprungartig nachbilden zu können. Diese sprungartige Veränderung ist auch charakteristisch für die Veränderungen des Widerstands eines realen Zündelements in Abhängigkeit von der Zeit.

Es ist weiterhin vorteilhaft, dass diese digitale Ansteuerung zumindest teilweise in Abhängigkeit von Zufallszahlen erfolgt. Damit ist gewährleistet, dass das zufällige Verändern des Zündelements durch das Verwenden von solchen Zufallszahlen sehr gut nachgebildet werden kann. Dieses Zufallsprinzip wird auch bei der Länge der Blöcke angewendet. Dabei kann auch eine Mischung aus determinierten Veränderungen und zufälligen Veränderungen im Zeitablauf vorgesehen sein. Diese Zufallszahlen können beispielsweise in einem Speicher abgelegt sein, oder sie können beispielsweise anhand einer Temperaturmessung erzeugt werden. Auch andere Methoden zur Generierung dieser Zufallszahlen sind möglich.

Es ist weiterhin vorteilhaft, dass die Nachbildung, wie oben angedeutet, wenigstens einen ersten elektrisch steuerbaren Schalter aufweist. Bei diesen Schaltern, die im Falle von Subtransistoren beispielsweise sehr niedrige Widerstände im geöffneten Zustand aufweisen müssen in Bereich von wenigen mΩ kommen auch andere Bauelemente in Frage, und zwar Bipolar- oder Feldeffekttransistoren, Thyristoren, Triacs, IGBT oder sogenannte Solid State Relais. Es sind dabei beliebig viele Schalter in beliebigen Kombinationen zur Erzielung unterschiedlichster Belastungsprofile einsetzbar.

Es ist weiterhin vorteilhaft, dass die Nachbildung eine Parallelschaltung mit mindestens vier Zweigen aufweist, wobei die Parallelschaltung zwischen den zu prüfenden zwei Leistungsschaltern geschaltet ist und dass zusätzlich parallel zu einem der zwei Leistungsschalter wenigstens ein zweiter, elektrisch steuerbarer Schalter vorgesehen ist. Durch diese Parallelschaltung kann dann durch entsprechende Besetzung mit elektrisch steuerbaren Schaltern ein gewünschtes oder zufälliges Belastungsprofil je nach Ansteuerung eingestellt werden. Durch das zusätzliche Vorsehen eines weiteren Schalters, parallel zumindest zu einem der zwei Leistungsschalter, kann ein Kurzschluss gegen Masse oder gegen die Versorgungsspannung oder zu einem anderen Punkt hin simuliert werden.

Eine besonders vorteilhafte Konfiguration ist darin zu sehen, dass in dem ersten Zweig der Parallelschaltung wenigstens ein Widerstand und in den übrigen drei Zweigen zumindest ein dritter steuerbarer Schalter vorgesehen sind. Diese Kombination hat sich als besonders geeignet gezeigt, um die verschiedenen Belastungsprofile für die Prüfung der Leistungsschalter zu erzeugen.

Es ist weiterhin vorteilhaft, dass diese elektrisch steuerbaren Schalter potenzialfrei ansteuerbar sind.

Ausführungsbeispiele der Erfindung sind in der Zeichnung dargestellt und werden in der nachfolgenden Beschreibung näher erläutert.

Es zeigen:
Figur 1 ein Blockschaltbild eines Steuergeräts zur Ansteuerung von Personenschutzmitteln mit angeschlossenen Komponenten,
Figur 2 ein Schaltbild der erfindungsgemäßen Schaltung,
Figur 3 ein Zeitablaufdiagramm,
Figur 4 ein weiteres Schaltbild der Erfindung und
Figur 5 ein Flussdiagramm des erfindungsgemäßen Verfahrens.

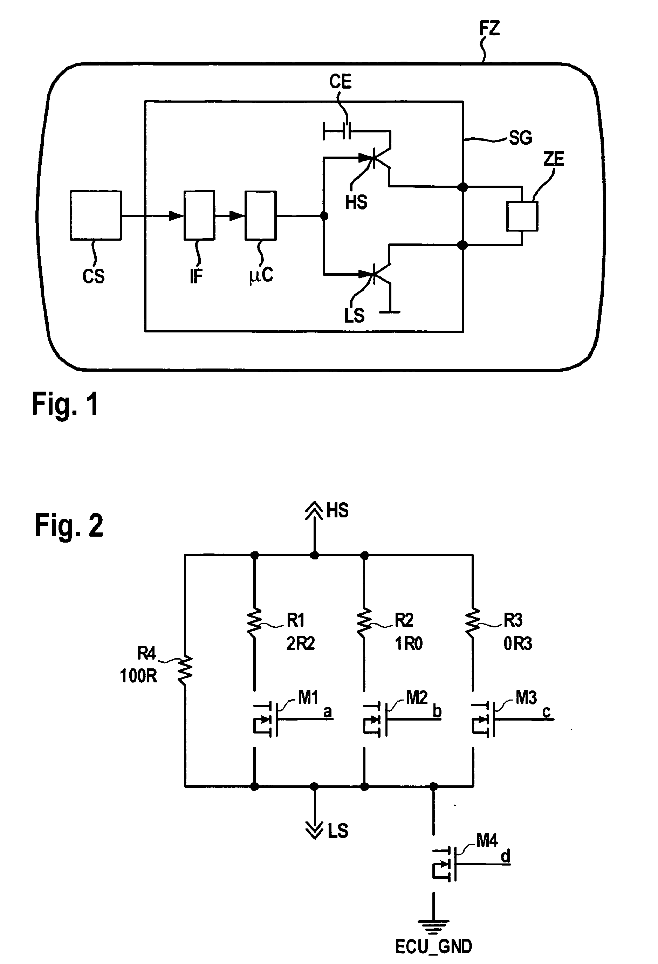

Figur 1 zeigt in einem Blockschaltbild ein Steuergerät SG zur Ansteuerung von Personenschutzmitteln wie Airbags oder Gurtstraffer mit angeschlossenen Komponenten, nämlich einer Crashsensorik CS und einem Zündelement ZE. Beispielhaft sind hier nur die Komponenten, die für das Verständnis der Erfindung notwendig sind, dargestellt. Weitere Komponenten, wie beispielsweise Mehrsensoren und Mehrzündelemente sind der Einfachheit halber weggelassen worden. Dies gilt auch für die übrigen Komponenten des Steuergeräts SG.

Im Fahrzeug FZ befindet sich eine Crashsensorik CS, die beispielsweise Beschleunigungssensoren, Umfeldsensoren, Körperschallsensoren und Luftdrucksensoren umfasst. Diese Crashsensorik CS, die konzentriert oder verteilt im Fahrzeug vorgesehen sein kann, überträgt ihre Signale beispielsweise durch eine Strommodulation an eine Schnittstelle IF im Steuergerät SG. Diese Schnittstelle IF ist vorliegend als integrierter Schaltkreis ausgebildet. Es ist möglich, sie diskret aus mehreren integrierten Schaltkreisen oder aus Software nachzubilden.

Die Sensorsignale werden zum Mikrocontroller µC übertragen, der mit einem Auswertealgorithmus diese Crashsignale auswertet, dahingehend, ob die Personenschutzmittel anzusteuern sind oder nicht. Kommt der Mikrocontroller µC zu dem Ergebnis, die Personenschutzmittel anzusteuern, dann steuert er beispielsweise über den SPI-Bus die elektrisch steuerbaren Leistungsschalter HS und LS an. Dabei bedeutet HS die High Side und LS die Low Side, die gegen Masse geschaltet ist. Die High Side ist mit der Energiereserve CE verbunden, die durch eine Ladeschaltung auf eine hohe Spannung aufgeladen wurde. Die Energiereserve CE als ein Elektrolytkondensator liefert die Zündenergie für die Zündung des Zündelements ZE, das sich außerhalb des Steuergeräts SG befindet, und zwar so, dass die Zündung die Aktivierung bzw. Ansteuerung des jeweiligen Personenschutzmittels bewirkt. Dazu müssen die Schalter HS und LS geschlossen werden, so dass ein Stromfluss von der Zündenergie in der Energiereserve CE über Zündelement ZE zur Masse bewirkt werden kann. Diese Zündung bewirkt, dass das Zündelement seinen Widerstand in erratischer Weise ändert. Das heißt, es ist kaum vorhersehbar, in welcher Weise das Zündelement seinen Widerstand ändern wird, auch Kurzschlüsse, beispielsweise gegen Masse, können dabei vorkommen.

Die erfindungsgemäße Schaltung bzw. das erfindungsgemäße Verfahren wollen ein solches Verhalten des Zündelements ZE nachbilden. Dazu wird beispielsweise die Schaltung gemäß Figur 2 vorgeschlagen. Zwischen der High Side HS und der Low Side LS ist eine Parallelschaltung aus vier Zweigen geschaltet, während zur Low Side ein weiterer Schalter M4 gegen Masse geschaltet ist. Im ersten Zweig weist die Parallelschaltung einen Widerstand R4 auf, im zweiten Zweig einen Transistorschalter M1, der durch das Signal a angesteuert wird und ein Vorwiderstand R1. Im dritten Zweig sind ein weiterer Transistorschalter M2, der durch das Signal b geschaltet wird und ein Vorwiderstand R2 vorgesehen. Im vierten Zweig sind ein weiterer Transistorschalter M3, der durch das Signal c geschaltet wird, und ein Vorwiderstand R3 vorgesehen. Der Schalter M4 wird durch das Signal d angesteuert. Die Schalter M1 bis 4 sollen im Durchlassbereich einen niedrigen Widerstand von wenigen mΩ aufweisen. R1 kann dabei bspw. 2,2 Ohm, R2 1 Ohm, R3 0,3 Ohm und R4 100 Ohm aufweisen.

Durch eine zeitabhängige Steuerung der Schalter M1 bis M4 ist es möglich, den Widerstand der Parallelschaltung schnell zu verändern, insbesondere, wenn eine digitale Ansteuerung vorliegt. Durch den Schalter M4 ist es möglich, Kurzschlüsse gegen Masse nachzubilden. Es könnten jedoch auch Kurzschlüsse gegen andere Potenziale nachgebildet werden. Die potenzialfreie Ansteuerung kann durch verschiedene Bauelemente vorgenommen werden. Beispielsweise durch Logikgatter programmierbare Bausteine, Funktionsgeneratoren und Mikrocontroller. Auch eine Ansteuerung über Optokoppler ist möglich. Die erfindungsgemäße Schaltung wird an das Steuergerät bzw. an die beiden Leistungsschalter direkt angeschlossen.

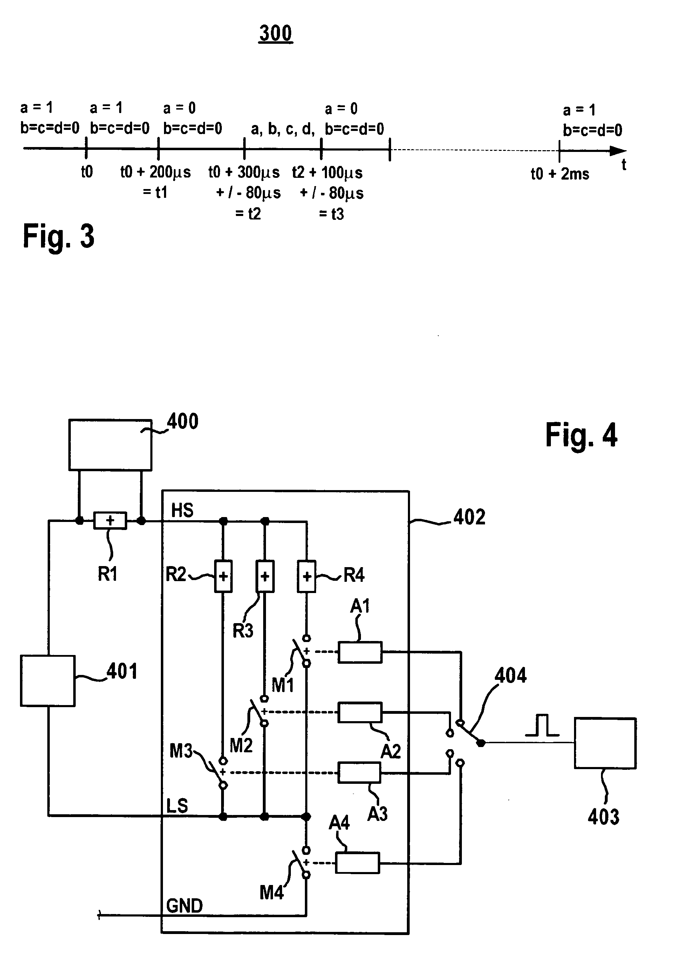

Figur 3 zeigt einen zeitlichen Ablauf der Blöcke, um die einzelnen Phasen der Widerstandsänderungen des nachgebildeten Zündelements darzustellen.

Die Initialisierung der Ansteuerung erfolgt dann, wenn an dem entsprechenden Zündkanal eine Spannungsdifferenz von > ca. 3 Volt zwischen der High Side HS und der Low Side LS auftritt. Das Verfahren wird demnach automatisch eingeleitet, da nicht bekannt ist, zu welchem Zeitpunkt die Zündung der Endstufen erfolgt.

Dabei muss sichergestellt sein, dass der Transistors M1 niederohmig ist. Dies bedeutet, er wird mit der logischen 1 angesteuert, wie in Figur 3 vor t0 angedeutet. a, b, c und d sind gleich null, das heißt auf "sperren" geschaltet. Unmittelbar nach dem Start des Zündvorgangs t0, das heißt sowohl die High Side HS als auch die Low Side LS sind aktiviert, muss der Zündstrom über M1 für 200 µs fließen, danach geht die Anordnung zum Zeitpunkt t1 in den hochohmigen Zustand, das heißt a, b, c und d sind auf logisch null. Die Zeitdauer, also der Block, für die diese Hochohmigkeit eingestellt wird, wird für eine Random-Zeit, also für eine zufällige Zeit, im Bereich von 200 µs +/- 50 µs geschaltet, wobei die Toleranz variabel vorgegeben werden kann. Nach Ablauf dieser Blöcke aus einer aktiven Phase mit einem Sollstromfluss und anschließender passiver Phase, bei der der Sollstrom auf Grund der Hochohmigkeit nicht mehr möglich ist, schließen sich weitere Blöcke an. Beispielsweise zum Zeitpunkt t0 + 300 µs, also zum Zeitpunkt t2, bei der die Schaltsignale a, b, c und d zufällig in Abhängigkeit von Zufallszahlen bestimmt werden, wobei jedoch mindestens einer aktiv sein muss, also einer auf logisch Eins. Zum Zeitpunkt t3 ist dann wieder eine hochohmige Phase vorgesehen. Dieses Wechselspiel kann sich mit unterschiedlichen Zeiten und unterschiedlichen durchgeschalteten Transistoren wiederholen. Es können auch mehr als einer aktiv sein, aber mindestens einer sollte aktiv sein, sonst liegt eine hochohmige Phase vor. Die zufällige Beschaltung der einzelnen Signale a, b, c und d soll jedoch für den jeweiligen Block konstant sein.

Die aktiven und passiven Phasen haben jeweils eine Zeitdauer von 100 +/- 80 µs. Die Beaufschlagung des jeweiligen Zündkreises mit dem wechselnden Widerstand soll im Durchschnitt 2 ms betragen, so dass sich nach dem ersten Block 41 bis T3 im Durchschnitt 8 weitere Blöcke anschließen.

Der Transistor M4 schaltet in zufälliger Weise die Endstufen niederohmig gegen Masse, um einen weiteren möglichen Zustand des Zündkreises zu simulieren. Figur 4 zeigt ein weiteres Schaltbild der erfindungsgemäßen Schaltung. Die Schaltung 402 ist an die High Side HS und die Low Side LS angeschlossen sowie an die Masse GND des Steuergerätes SG. Die erfindungsgemäße Schaltung weist parallel Zweige R1 mit einer Energieversorgung 401 sowie in den weiteren Zweigen jeweils die Widerstände R2 und der Schalter M3, der Widerstand R3 und der Schalter M2 sowie der Widerstand R4 und der Widerstand M1. Parallel zur Low Side ist wieder der Schalter M4 dargestellt.

Der Schalter M1 wird durch die Ansteuerung A1 angesteuert, der Schalter M2 durch die Ansteuerung A2, der Schalter M3 durch die Ansteuerung A3 und der Schalter M4 durch die Ansteuerung A4. Diese Ansteuerungen können potenzialfrei ausgebildet sein, das heißt beispielsweise als Optokoppler.

Über den Schalter 404 gelangen die von einem Pulsgenerator 403 erzeugten Pulse an die Ansteuerungen A1 bis A4 ggfs. auch an mehrere gleichzeitig, um die jeweiligen elektrischen Schalter der Prüfschaltung 402, M1 bis M4 durchzuschalten. Weiterhin wird ein Messgerät 400 vorgeschlagen, beispielsweise ein Oszilloskop, das in einem Kanal die Spannung über den Widerstand R1 und in einem weiteren Kanal das Pulssignal des Pulsgenerators 403 aufnimmt. Die Spannungsversorgung 401 liefert die entsprechende Versorgungsspannung.

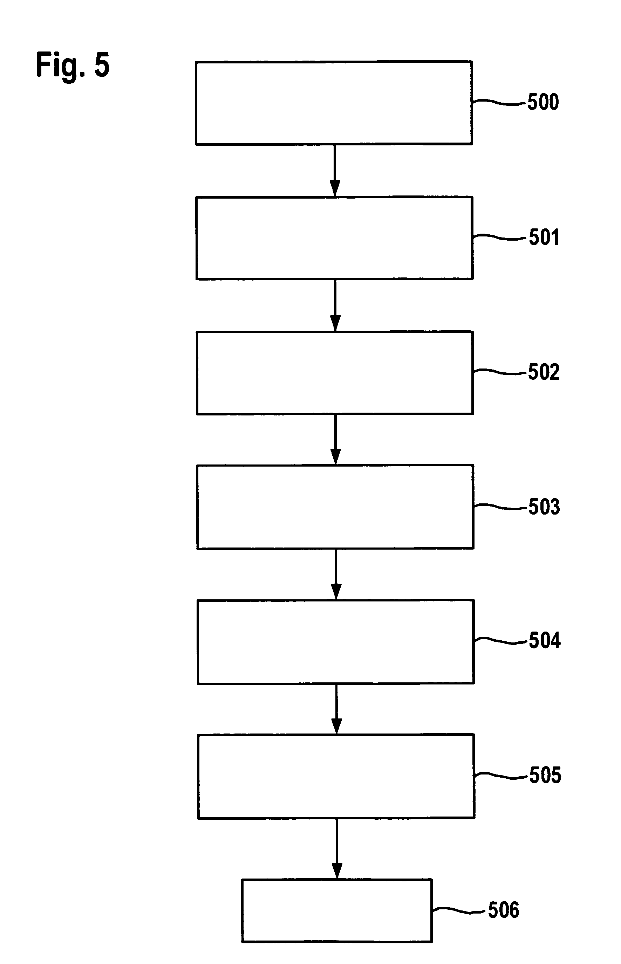

Figur 5 zeigt ein Flussdiagramm des erfindungsgemäßen Verfahrens. In Verfahrensschritt 500 erreicht die Spannung zwischen High Side und Low Side die oben angegebenen 3 Volt oder einen anderen Wert, der als Initialisierung für das erfindungsgemäße Verfahren gilt. In Verfahrensschritt 501 erfolgt der Fluss des Zündstroms über den durchgeschalteten Schalter M1 für 200 µs. Nach dieser Sollstromphase erfolgt in Verfahrensschritt 502 eine hochohmige Phase für eine zufällige Zeit. Dabei sind alle Transistorschalter gesperrt. Wiederum wird eine Stromphase darauf folgen, wobei wenigstens einer der Schalter M1 bis M4 aktiv ist und für eine zufällige Zeit geschlossen wird. Dies erfolgt in Verfahrensschritt 503 und 504, wiederum eine hochohmige Phase, die ebenfalls bezüglich der zeitlichen Länge zufällig variabel ist. Dies kann sich beliebig oft wiederholen, beispielsweise bis 2 ms abgelaufen sind. In Verfahrensschritt 505 wird wiederum der Zündstrom über M1 geleitet, um dann das Verfahren in Verfahrensschritt 506 zu beenden.

## Patentansprüche

1. Schaltung zum Prüfen von elektrisch steuerbaren Leistungsschalter (HS, LS) für ein Ansteuern von Personenschutzmitteln (PS), wobei wenigstens ein Zündelement einen Widerstand durch für die Prüfung nachgebildet wird, **dadurch gekennzeichnet dass** der Widerstand dieser Nachbildung durch eine Ansteuerung der Nachbildung für aufeinander folgende zeitliche Blöcke jeweils verändert wird.

2. Schaltung nach Anspruch 1, **dadurch gekennzeichnet, dass** die Ansteuerung digital ausgebildet ist.

3. Schaltung nach Anspruch 2, **dadurch gekennzeichnet, dass** die digitale Ansteuerung zumindest teilweise in Abhängigkeit von Zufallszahlen erfolgt.

4. Schaltung nach einem der vorhergehenden Ansprüche, **dadurch gekennzeichnet, dass** die Nachbildung wenigstens einen ersten steuerbaren elektrischen Schalter aufweist.

5. Schaltung nach Anspruch 4, **dadurch gekennzeichnet, dass** die Nachbildung eine Parallelschaltung mit mindestens vier Zweigen aufweist, wobei die Parallelschaltung zwischen den zu prüfenden zwei Leistungsschaltern geschaltet ist und dass zusätzlich parallel zumindest zu einem der zwei Leistungsschalter wenigstens ein zweiter elektrisch steuerbarer Schalter vorgesehen ist.

6. Schaltung nach Anspruch 5, **dadurch gekennzeichnet, dass** in dem ersten Zweig wenigstens ein Widerstand und in den übrigen drei Zweigen jeweils wenigstens ein dritter, elektrisch steuerbarer Schalter vorgesehen ist.

7. Schaltung nach einem der Ansprüche 4 bis 6, **dadurch gekennzeichnet, dass** der wenigstens eine elektrisch steuerbare Schalter potenzialfrei ansteuerbar ist.

8. Verfahren zum Prüfen von elektrisch steuerbaren Leistungsschaltern (HS, LS) für ein Ansteuern von. Perspnenschutzmitteln, wobei wenigstens ein Zündelement (ZE) durch ein Widerstandfür die Prüfung nachgebildet wird, dass **dadurch gekennzeichnet** der Widerstand dieser Nachbildung durch eine Ansteuerung der Nachbildung für aufeinander folgende zeitliche Blöcke jeweils verändert wird.

9. Verfahren nach Anspruch 8, **dadurch gekennzeichnet, dass** die Ansteuerung digital erfolgt.

10. Verfahren nach Anspruch 9, **dadurch gekennzeichnet, dass** die digitale Ansteuerung zumindest teilweise in Abhängigkeit von Zufallszahlen erfolgt.

## Claims

1. Circuit for testing electrically controllable circuit breakers (HS, LS) for operating personal protection means (PS), wherein at least one initiation element is simulated by a resistor for the test, **characterized in that** the resistance for this simulation is in each case varied by operating the simulation for successive time blocks.

2. Circuit according to Claim 1, **characterized in that** the operation is carried out digitally.

3. Circuit according to Claim 2, **characterized in that** the digital operation is at least partially carried out as a function of random numbers.

4. Circuit according to one of the preceding claims, **characterized in that** the simulation has at least one first controllable electrical switch.

5. Circuit according to Claim 4, **characterized in that** the simulation has a parallel circuit with at least four branches, wherein the parallel circuit is connected between the two circuit breakers to be tested, and **in that** at least one second electrically controllable switch is additionally provided in parallel with at least one of the two circuit breakers.

6. Circuit according to Claim 5, **characterized in that** at least one resistor is provided in the first branch, and at least one third electrically controllable switch is provided in each of the other three branches.

7. Circuit according to one of Claims 4 to 6, **characterized in that** the at least one electrically controllable switch can be operated in a potential-free manner.

8. Method for testing electrically controllable circuit breakers (HS, LS) for operating personal protection means, wherein at least one initiation element (ZE) is simulated by a resistor for the test, **characterized in that** the resistance for this simulation is in each case varied by operating the simulation for successive time blocks.

9. Method according to Claim 8, **characterized in that** the operation is carried out digitally.

10. Method according to Claim 9, **characterized in that** the digital operation is at least partially carried out as a function of random numbers.

## Revendications

1. Circuit de vérification de commutateurs de puissance (HS, LS) commandés électriquement et destinés à commander des moyens (PS) de protection des personnes, dans lequel au moins un élément d'allumage est simulé par une résistance pour la vérification, **caractérisé en ce que**
la résistance de cette simulation est modifiée par commande de la simulation pour des blocs temporels successifs.

2. Circuit selon la revendication 1, **caractérisé en ce que** la commande est numérique.

3. Circuit selon la revendication 2, **caractérisé en ce que** la commande numérique s'effectue au moins en partie en fonction de nombres aléatoires.

4. Circuit selon l'une des revendications précédentes, **caractérisé en ce que** la simulation présente au moins un premier commutateur électrique commandé.

5. Circuit selon la revendication 4, **caractérisé en ce que** la simulation présente un circuit parallèle qui présente au moins quatre branches, le circuit parallèle étant raccordé entre les deux commutateurs de puissance à vérifier, et **en ce qu'**au moins un autre commutateur commandé électriquement est prévu en parallèle à au moins l'un des deux commutateurs de puissance.

6. Circuit selon la revendication 5, **caractérisé en ce qu'**au moins une résistance est prévue dans la première branche et au moins un troisième commutateur électrique commandé est prévu dans chacune des trois autres branches.

7. Circuit selon l'une des revendications 4 à 6, **caractérisé en ce que** le ou les commutateurs électriques commandés peuvent être commandés sans potentiel.

8. Procédé de vérification de commutateurs de puissance (HS, LS) commandés électriquement en vue de la commande de moyens de protection des personnes, dans lequel au moins un élément d'allumage (ZE) est simulé par une résistance pour la vérification,
**caractérisé en ce que**
la résistance de cette simulation est modifiée par une commande de la simulation pour des blocs temporels successifs.

9. Procédé selon la revendication 8, **caractérisé en ce que** la commande est numérique.

10. Procédé selon la revendication 9, **caractérisé en ce que** la commande numérique s'effectue au moins en partie en fonction de nombres aléatoires.
